# EUROPÄISCHE PATENTSCHRIFT

(11) **EP 1 244 582 B1**
(45) Veröffentlichungstag und Bekanntmachung des Hinweises auf die Patenterteilung: **31.08.2005**
(21) Anmeldenummer: 00985175.9
(22) Anmeldetag: 16.12.2000
(51) Int. Cl.: B60T 8/00, G08G 1/00

(54) **STRASSEN ZUSTANDSERKENNUNG MIT FREMDSYSTEMSTRAHLUNG GPS, DBS**
DETECTION OF ROAD CONDITIONS USING A BEAM FROM AN EXTERNAL SYSTEM, I.E. GPS, DBS
DETECTION DE L'ETAT DE ROUTES A L'AIDE D'UN RAYONNEMENT D'UN SYSTEME EXTERIEUR GPS OU DBS

(30) Priorität: 24.12.1999 DE 19962949
(43) Veröffentlichungstag der Anmeldung: 02.10.2002
(73) Patentinhaber: DaimlerChrysler AG, 70567 Stuttgart (DE)
(72) Erfinder: BALASUBRAMANIAN, B. Kannan, Kolhapur 416 003, Maharashtra (IN); BHAGAVATHULA, Seshu, 89077 Ulm (DE); KATRAGADDA, Shanmukh, Bangalore 560 012 (IN)
(86) Internationale Anmeldenummer: PCT/EP2000/012845
(87) Internationale Veröffentlichungsnummer: WO 2001/047759

(56) Entgegenhaltungen:
- DE-A- 3 940 253
- DE-A- 4 200 299
- US-A- 5 675 081
- US-A- 5 793 329
- US-A- 5 926 125

## Beschreibung

Die Erfindung bezieht sich auf eine Vorrichtung zur abtaststrahlungsbasierten Erkennung des Oberflächenzustands von Erdoberflächenbereichen, insbesondere von Verkehrsstraßenbereichen, nach dem Oberbegriff des Anspruchs 1.

In den Patentschriften US 4.653.316, US 4.690.553, US 5.446.461 und US 5.497.100 sind Vorrichtungen dieser Art zur Erkennung des Oberflächenzustands von Straßen beschrieben, die sämtlich als "aktive" Systeme ausgelegt sind, worunter zu verstehen ist, daß sie einen eigens zu diesem Zweck vorgesehenen Abtaststrahlungssender umfassen, der die benutzte Abtaststrahlung erzeugt, von der wenigstens ein Teil auf den zu überwachenden Straßenbereich gerichtet wird. Als Abtaststrahlung wird beispielsweise sichtbares Licht, z.B. von einem Laser, oder Infrarotstrahlung oder eine andere elektromagnetische Strahlung verwendet. Über geeignete Empfangsmittel wird mindestens ein vom abgetasteten Straßenbereich reflektierter Abtaststrahlungsanteil, der die Oberflächenzustandsinformation enthält, aufgenommen und Auswertemitteln zugeführt, die diesen Zustandsinformations-Abtaststrahlungsanteil einer geeigneten Auswertung unterziehen, um daraus auf den Oberflächenzustand des abgetasteten Straßenbereichs zu schließen. Diese Auswertung kann je nach Systemauslegung einen Vergleich mehrerer auf den überwachten Straßenbereich gerichteter und von diesem reflektierter Abtaststrahlungsanteile und/oder einen Vergleich eines oder mehrerer solcher reflektierter Abtaststrahlungsanteile mit einem zugehörigen Referenz-Abtaststrahlungsanteil beinhalten, der vom Abtaststrahlungssender ohne vorherige Reflektion am überwachten Straßenbereich zu den Empfangsmitteln gelangt. Die Erkennung des Straßenoberflächenzustands dient insbesondere der Feststellung, ob die Straße trocken oder naß ist oder ob sie von Schnee oder Eis bedeckt ist.

Alternativ zur aktiven Systemauslegung ist in der Patentschrift US 5.521.594 eine "passive" Systemauslegung einer Vorrichtung der eingangs genannten Art beschrieben, worunter eine Systemauslegung zu verstehen ist, die ohnehin aus anderen Gründen vorhandene Strahlung als Abtaststrahlung nutzt und daher ohne einen eigens zu diesem Zweck vorzusehenden Abtaststrahlungssender auskommt. Die dortige Vorrichtung, die zwangsläufig an einem Fahrzeug zu installieren ist, nutzt als Abtaststrahlung Ultraschall-Störstrahlung, d.h. Ultraschallrauschen, das während der Fahrt von einem Fahrzeugreifen generiert wird und bei nasser Straße gegenüber trockener Straße deutlich erhöht ist. Passive Systeme haben gegenüber aktiven Systemen allgemein den Vorteil, daß der Aufwand für einen eigenen Abtaststrahlungssender entfällt und zudem nicht noch zusätzlich Strahlung in die ohnehin meist schon stark strahlungsbelastete Umwelt eingebracht wird. Die Nutzung von reifenseitig erzeugtem Ultraschallrauschen ist jedoch im wesentlichen auf die Unterscheidung zwischen trockener und nasser Straße und vor allem auf fahrzeugseitig installierte Systeme beschränkt.

Der Erfindung liegt als technisches Problem die Bereitstellung einer Vorrichtung der eingangs genannten Art zugrunde, mit welcher der Oberflächenzustand von Verkehrstraßenbereichen und anderen Erdoberflächenbereichen mit relativ geringem Aufwand vergleichsweise zuverlässig und genau erkannt werden kann, insbesondere dahingehend, welcher Belag vorliegt und/oder ob die abgetastete Oberfläche naß oder trocken oder von Eis, Schnee, Sand oder dergleichen bedeckt ist.

Die Erfindung löst dieses Problem durch die Bereitstellung einer Vorrichtung mit den Merkmalen des Anspruchs 1.

Bei der Vorrichtung nach Anspruch 1 ist die Abtaststrahlung charakteristischerweise von einer Nutzsignalstrahlung eines Fremdsystems gebildet. Unter Nutzsignalstrahlung ist hierbei eine Strahlung zu verstehen, die als Nutzsignal des Fremdsystems fungiert, wobei unter Fremdsystem irgendein beliebiges anderes. System außer der Oberflächenzustandserkennungsvorrichtung gemeint ist. Die Vorrichtung nach Anspruch 1 macht folglich von einer ohnehin durch das Fremdsystem bereitgestellten Nutzsignalstrahlung Gebrauch, um sie als Abtaststrahlung einzusetzen. Mit anderen Worten wird die Nutzsignalstrahlung doppelt genutzt, einerseits als Nutzsignal für das Fremdsystem und andererseits als Abtaststrahlung für die Oberflächenzustandserkennung. Die Vorrichtung nach Anspruch 1 bildet somit ein passives System im oben definierten Sinn mit dem weiteren Vorteil, daß sie als Abtaststrahlung eine Nutzsignalstrahlung eines Fremdsystems verwendet, die durch das Fremdsystem ohnehin bereitgestellt wird. Im Gegensatz zur Verwendung einer Störstrahlung im Rahmen einer solchen passiven Systemauslegung hat die Verwendung einer Nutzsignalstrahlung den Vorteil, daß letztere im allgemeinen sehr zuverlässig vorhanden sein wird, da sie ja vom Fremdsystem für dessen Nutzsignale benötigt wird.

Die Weiterbildung nach Anspruch 2 zeichnet sich dadurch aus, daß die Abtaststrahlung von einem oder mehreren satellitenseitig angeordneten Strahlungssendern bereitgestellt wird. Dies ermöglicht eine entsprechend großflächige Nutzung der Abtaststrahlung auf der Erdoberfläche und damit beispielsweise eine Erkennung des Straßenoberflächenzustands über weiträumige Straßenverkehrsnetze hinweg, ohne daß in jedem der das Verkehrsnetz nutzenden Fahrzeuge ein Abtaststrahlungssender installiert werden muß.

Letzteres ist in einer Weiterbildung der Erfindung nach Anspruch 3 gegeben, indem die Abtaststrahlung von der Radar- bzw. Radiowellenstrahlung eines satellitengestützten Ortungssystems, wie des GPS (Global Positioning System) oder eines satellitengestützten Rundfunk- bzw. Fernsehübertragungssystem, wie des DBS (Direct Broadcasting System) gebildet ist.

In einer Weiterbildung der erfindungsgemäßen Vorrichtung nach Anspruch 4 berücksichtigt die Auswertung der empfangenen Abtaststrahlung zusätzlich zu dem vom überwachten Erdoberflächenbereich reflektierten Abtaststrahlungsanteil einen ebenfalls empfangenen zugehörigen Referenz-Abtaststrahlungsanteil, d.h. einem Abtaststrahlungsanteil, der nicht vom überwachten Erdoberflächenbereich reflektiert wird und sich daher als Referenz zum Vergleichen mit dem von diesem Bereich reflektierten Abtaststrahlungsanteil eignet, der die Information über den Oberflächenzustand enthält. Ein derartiger Vergleich mit einem Referenz-Abtaststrahlungsanteil kann die Qualität der Oberflächenzustandserkennung verbessern.

In einer Weiterbildung der Erfindung nach Anspruch 5 werden der reflektierte Zustandsinformations-Abtaststrahlungsanteil und gegebenenfalls der oder die weiteren empfangenen Abtaststrahlungsanteile von den Auswertemitteln wenigstens hinsichtlich Amplitude, Phase und/oder Polarisationszustand ausgewertet, wobei die gleichzeitige Verwendung von zwei oder von allen drei dieser Auswertekriterien die Qualität der Oberflächenzustandserkennung merklich verbessern kann.

In einer Weiterbildung der Erfindung nach Anspruch 6 beinhalten die Auswertemittel geeignete Klassifikationsmittel, die eine Klassifikation des Oberflächenzustands in mehrere verschiedene, vorgebbare Typen ermöglichen, z.B. eine Klassifikation der Beschaffenheit eines abgetasteten Straßenbelages in verschiedene Belagstypen, wie Beton, Sand, feiner Stein (wie Asphalt, Teer und Schotter) und grober Stein (wie Ziegel- oder Pflasterstein).

Vorteilhafte Ausführungsformen der Erfindung sind in den Zeichnungen dargestellt und werden nachfolgend beschrieben. Hierbei zeigen:
- Fig. 1: eine schematische Darstellung eines Teils einer Vorrichtung zur Erkennung des Oberflächenzustands von Verkehrsstraßenbereichen,
- Fig. 2: ein Blockdiagramm eines Empfangs- und Auswerteteils der Vorrichtung gemäß Fig. 1,
- Fig. 3: ein Blockschaltbild des Empfangsteils von Fig. 2 und
- Fig. 4: ein Blockschaltbild eines Signalverarbeitungsteils zur Merkmalsableitung innerhalb des Auswerteteils von Fig. 2.

Das in den Zeichnungen dargestellte und nachfolgend näher erläuterte Ausführungsbeispiel stellt eine Vorrichtung zur abtaststrahlungsbasierten Erkennung des Oberflächenzustands von Verkehrsstraßenbereichen dar, die speziell die Radar- bzw. Radiowellenstrahlung eines GPS oder DBS nutzt. Dazu bedient sich das Oberflächenzustandserkennungssystem der Nutzsignalstrahlung, die von entsprechenden GPS- bzw. DBS-Satelliten primär zur Erfüllung der Ortungs- bzw. Rundfunk- oder Fernsehdatenübertragungsfunktion des GPS- bzw. DBS-Fremdsystems emittiert wird.

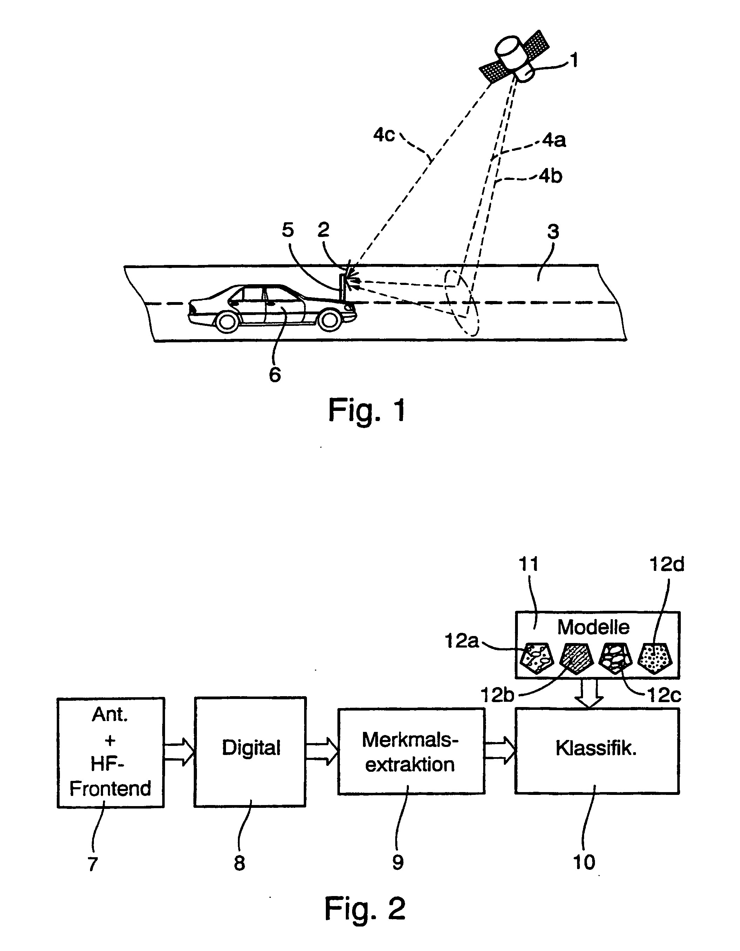

Wie in Fig. 1 beispielhaft anhand eines von mehreren beteiligten Satelliten 1 dargestellt, wird die von den Satelliten 1 emittierte Nutzstrahlung als Abtaststrahlung zur Oberflächenzustandserkennung in der Form benutzt, daß von einer jeweiligen Antenneneinheit 2 drei unterschiedliche Nutzsignalstrahlungsanteile als entsprechende Abtaststrahlungsanteile empfangen und ausgewertet werden. Speziell wird hierzu ein erster, vom überwachten Straßenbereich 3 reflektierter Abtaststrahlungsanteil 4a mit einem ersten Polarisationszustand, ein zweiter, vom überwachten Straßenbereich 3 reflektierter Abtaststrahlungsanteil 4b mit einem zweiten Polarisationszustand und ein direkt vom Satelliten 1 ohne vorherige Reflektion am überwachten Straßenbereich 3 kommender Referenz-Abtaststrahlungsanteil 4c empfangen und ausgewertet. Vorzugsweise wird sowohl GPS- als auch DBS-Nutzstrahlung als Abtaststrahlung zur Oberflächenzustandserkennung genutzt, um eine besonders hohe Qualität der Beurteilung des Oberflächenzustands zu erhalten.

Da GPS- und DBS- bzw. TV-Satelliten weltumspannend arbeiten und verfügbar sind, läßt sich mit der vorliegenden Vorrichtung der Straßenoberflächenzustand von Verkehrsnetzen weltweit mit standardisierten Empfangs- und Auswerteteilen erkennen, die auf die standardisierte GPS- bzw. DBS-Nutzstrahlung abgestimmt sind, ohne daß Anpassungen an unterschiedliche nationale Standards oder Vorschriften erforderlich sind. Durch Auswerten der Nutzsignale von wenigstens vier der beteiligten Satelliten 1 können die jeweiligen Zeit- und Ortskoordinaten bestimmt werden.

Im Beispiel von Fig. 1 sind mehrere Antenneneinheiten 2 jeweils an über das Straßenverkehrsnetz verteilt stationär angeordneten Baken 5 montiert, die in einer herkömmlichen, nicht näher gezeigten Weise in Kommunikationsverbindung mit vorbeifahrenden Fahrzeugen 6 treten können. Die Fahrzeuge 6 sind dann mit dem zugehörigen Auswerteteil bestückt, um die von der Antenneneinheit 2 aufgenommenen Abtaststrahlungsdaten zur Erkennung des Straßenoberflächenzustands auszuwerten. Alternativ kann eine straßenseitige, stationäre Anordnung der Auswerteteile und zugehöriger Anzeigeeinheiten vorgesehen sein, über die dann der lokale Straßenoberflächenzustand den vorbeifahrenden Fahrzeugen angezeigt wird, z.B. an vorhandenen Verkehrsinformationsbaken oder -brücken zusammen mit anderen Verkehrsinformationen. In einer weiteren Alternative können Antennen- und Auswerteteil vollständig fahrzeugseitig angeordnet sein.

Fig. 2 zeigt in einer Schemaübersicht den groben Aufbau der passiven Vorrichtung zur Erkennung des Straßenoberflächenzustands. Wie daraus ersichtlich, schließt sich an eine Eingangsstufe 7, die den Antennenteil und ein Hochfrequenz-Frontend umfaßt, eine Digitalisierungsstufe 8 an, der eine Merkmalsextraktionsstufe 9 nachgeschaltet ist. Die Ausgangsinformationen der Merkmalsextraktionsstufe 9 werden einer Klassifikationsstufe 10 zugeführt, in der sie zwecks Klassifikation mit Modellzustandsdaten verglichen werden, die in einem zugehörigen Modellspeicher 11 abgelegt sind, und zwar in Form einer vorgebbaren Anzahl unterschiedlicher Modellzustände 12a, 12b, 12c, 12d, wie Beton, feiner Stein (z.B. in Form von Asphalt, Teer oder Schotter), grober Stein (z.B. in Form von Ziegel- bzw. Pflasterstein) und Sand.

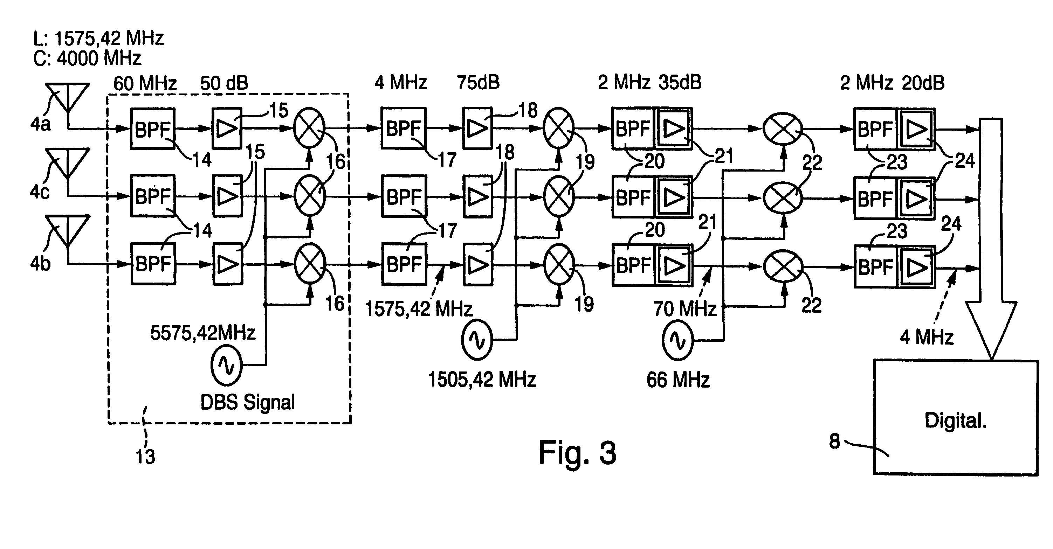

Fig. 3 zeigt detaillierter den Antennen- und HF-Frontend-Teil von Fig. 2, der zum Empfangen sowohl von DBS-Signalen im sogenannten C-Band, d.h. im Bereich von 4000MHz als auch von GPS-Signalen im sogenannten L-Band bei 1575,42MHz ausgelegt ist. Insgesamt beinhaltet die Empfangsstufe drei parallele Empfangskanäle für die drei unterschiedlichen aufgenommenen Abtaststrahlungsanteile 4a, 4b, 4c. Die empfangenen Strahlungsanteile 4a, 4b, 4c werden in den drei Kanälen gleichermaßen in mehreren Etappen herabkonvertiert. Speziell werden die DBS-Signalanteile der drei Abtaststrahlungsanteile 4a, 4b, 4c in drei Etappen auf 4MHz herabgemischt. Die GPS-Signalanteile werden ebenfalls auf eine Frequenz von 4MHz herabgemischt, wobei wegen der niedrigeren Eingangsfrequenz von 1575,42MHz schon eine zweifache Herabkonvertierung genügt.

Dazu wird in einer ersten Stufe 13 das Eingangssignal im jeweiligen Kanal zunächst über einen Bandpaßfilter 14 mit einer Bandbreite von 60MHz geführt, danach in einem Verstärker 15 mit 50dB verstärkt und anschließend in einem lokalen Oszillator 16 mit einem diesem zusätzlich zugeführten Radiofrequenzsignal einer Frequenz von 5575,42MHz gemischt, wobei diese Verarbeitungsstufe 13 speziell den DBS-Signalanteil betrifft. In einer nächsten Stufe wird das vom lokalen Oszillator 16 kommende Signal über einen Bandpaßfilter 17 mit einer Bandbreite von 4MHz geleitet, um eine Mittenfrequenz von 1575,42MHz zu erhalten, wie sie für den GPS-Signalanteil von vornherein vorliegt. Ab dieser Stelle werden die DBS- und die GPS-Signalanteile auf dieselbe Weise weiterbehandelt.

Diese Weiterbehandlung beinhaltet zunächst eine Verstärkung in einem Verstärker 18 mit 75dB, wonach das verstärkte Signal der Frequenz von 1575,42MHz in einem lokalen Oszillator 19 mit einem diesem zusätzlich zugeführten Signal auf einer Frequenz von 1505,42MHz gemischt wird. Das gemischte Signal wird über einen Bandpaßfilter 20 mit einer Bandbreite von 2MHz geführt und anschließend in einem Verstärker 21 mit 35dB wieder verstärkt. Das verstärkte Signal besitzt dann eine Mittenfrequenz von 70MHz und eine Bandbreite von 2MHz. In einem weiteren lokalen Oszillator 22 wird es mit einem diesem zusätzlich zugeführten Signal auf einer Frequenz von 66MHz gemischt, wonach es über einen Bandpaßfilter 23 mit einer Bandbreite von 2MHz geführt und anschließend in einem weiteren Verstärker 24 mit 20dB verstärkt wird.

Die drei parallelen, resultierenden Signale mit der gewünschten Mittenfrequenz von 4MHz werden dann der anschließenden Digitalisierungsstufe 8 zugeführt, die als wesentliches Element einen A/D-Wandler beinhaltet. In der Digitalisierungsstufe 8 werden die drei parallelen Signale mit Mittenfrequenz 4MHz und Bandbreite 2MHz auf einer Abtastfrequenz von 5MHz digitalisiert. In der anschließenden Merkmalsextraktionsstufe 9, siehe Fig. 2, werden die drei digitalisierten Signale durch einen geeignet ausgelegten Rechner bezüglich Merkmalsextraktion weiterverarbeitet.

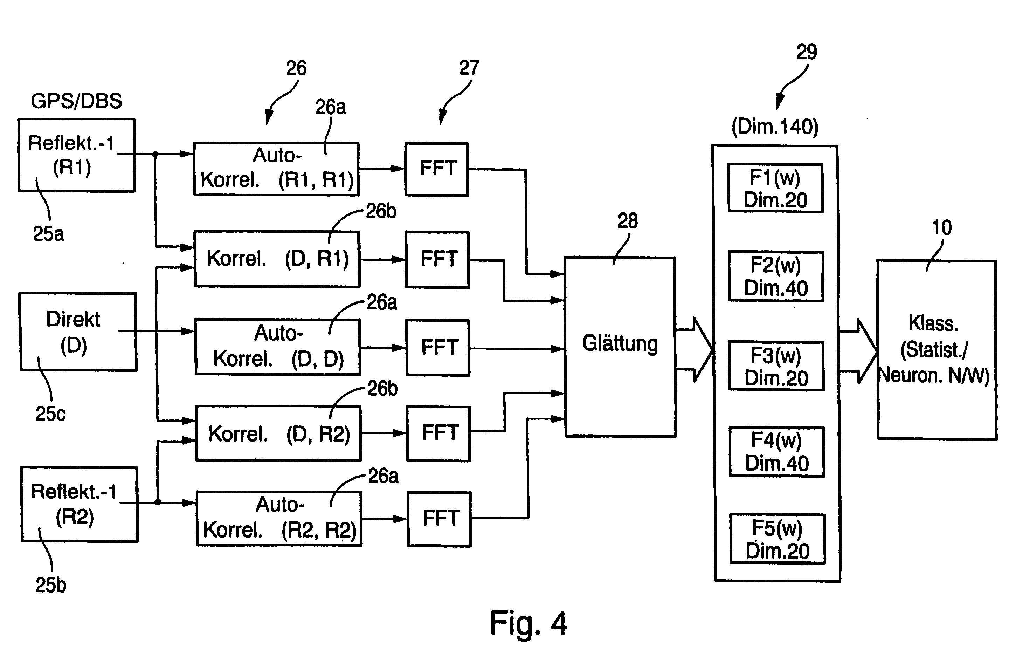

Fig. 4 zeigt einen geeigneten Aufbau der Merkmalsextraktionsstufe 9. Wie daraus ersichtlich, werden die digitalisierten Signale 25a, 25b, 25c, die den drei verschiedenen empfangenen Abtaststrahlungsanteilen 4a, 4b, 4c, siehe Fig. 1, entsprechen, aus den drei Kanälen der Digitalisierungsstufe hinsichtlich der Ableitung der für die spätere Klassifikation relevanten Merkmale hin dadurch verarbeitet, daß zunächst in einer Korrelationsstufe 26 jedes der drei Signale 25a, 25b, 25c, d.h. das "direkte" Signal D und die beiden "reflektierten" Signale R1, R2, welche die Zustandsinformation über die abgetastete Oberfläche enthalten, einer Auto-Korrelation 26a unterzogen und die beiden reflektierten Signale R1, R2 parallel dazu jeweils mit dem direkten Signal D korreliert werden. An die entsprechenden fünf Ausgangskanäle der Korrelationsstufe 26 schließt sich jeweils eine FFT-Stufe 27 an, in der eine 1000-Punkt-FFT (Fast Fourier Transformation) durchgeführt wird, um ein Leistungsspektrum zu erhalten. In einer anschließenden Glättungsstufe 28 wird jeder der 1000-dimensionalen fünf Einzelvektoren im Spektralbereich in einen 20-dimensionalen Vektor geglättet, indem der Durchschnitt für Blöcke von jeweils 500 Einheiten gebildet wird. Dabei werden insbesondere die Autokorrelationsspektren der direkten und reflektierten Signale so gerechnet. Daraus ergeben sich drei 20-dimensionale Vektoren. Die Kreuzkorrelationsspektren werden zusammengerechnet und geglättet, woraus sich zwei komplexe, je 20-dimensionale Vektoren ergeben. Aus diesen Spektren entsteht somit ein 140-dimensionaler Merkmalsvektor 29, welcher der Klassifikationsstufe 10 zugeführt wird.

In der Klassifikationsstufe 10 erfolgt eine klassifizierende Verarbeitung der im Merkmalsvektor 29 enthaltenen Informationen über den Oberflächenzustand des abgetasteten Straßenbereichs hinsichtlich des Straßenbelagstyps, d.h. eine Entscheidung darüber, zu welchem der mehreren vorgegebenen Straßenbelagstypen, d.h. Modellzuständen 12a bis 12d, wie sie im Modellspeicher 11 abgelegt sind, am besten den aufgenommenen und vorverarbeiteten Oberflächenzustandsdaten entspricht. Dazu kann die Klassifikationsstufe 10 beispielsweise zwei Klassifizierer beinhalten, nämlich einen statistischen Klassifizierer und einen neuronalen Klassifizierer. Als statistischer Klassifizierer läßt sich insbesondere ein solcher herkömmlicher Art einsetzen, der auf einer Mahalanobis-Abstanasbestimmung beruht. Für weitere Details der Mahalanobis-Abstandsbestimmung kann auf die Literatur verwiesen werden, siehe z.B. R. O. Duda und P. E. Hardt, Pattern Classification and Scene Analysis, Wiley-Interscience, John Wiley, 1973. Der neuronale Klassifizierer kann aus einem z.B. dreischichtigen Perceptron bestehen, das mit einem Rückverarbeitungsalgorithmus geeignet trainiert wird. Diesbezüglich kann ebenfalls auf die Literatur verwiesen werden, siehe z.B. das Textbuch D. E. Rumelhart et al., Learning Internal Representations by Error Propagation, Kapitel 8 in Parallel Distributed Processing, Band 1, Cambridge, MIT Press. Die beiden Klassifizierer werden mit Hilfe der Trainingsdaten aufgebaut, die aus einem geeigneten Satz von Merkmalsvektoren entsprechend der verschiedenen Oberflächenklassen, d.h. Modellzustände, bestehen.

Im Betrieb leistet der Auswerteteil dann mit seiner Klassifikationsstufe 10 zum einen eine Beurteilung darüber, welcher Belagstyp der gerade abgetastete Straßenbereich aufweist, d.h. ob es sich um eine Strecke mit Asphalt, Teer, Sand, Schotter, Pflasterstein etc. handelt, und zum anderen eine Beurteilung über den momentanen Oberflächengriffigkeitszustand, d.h. ob der abgetastete Straßenbereich trocken ist oder ob Nässe vorliegt oder ob er mit Eis oder Schnee bedeckt ist. Die Datenauswertung für diese Oberflächenzustandsbeurteilung entspricht derjenigen, wie sie von herkömmlichen aktiven Systemen zur Oberflächenzustandserkennung bekannt ist und bedarf daher hier keiner näheren Erläuterung. Für eine hohe Erkennungsgenauigkeit erfolgt die Signalauswertung sowohl hinsichtlich der Amplitude, d.h. der Signalleistung, als auch hinsichtlich Phase und Polarisationszustand. Alternativ kann eine Auswertung nur der Amplitude oder nur von Amplitude und Polarisation oder Phase genügen, wenn beispielsweise nicht sehr viele unterschiedliche Straßenoberflächenzustände erkannt werden müssen oder eine eingeschränkte Genauigkeit der Klassifikation derselben genügt.

Das oben beschriebene Ausführungsbeispiel verdeutlicht, daß durch die Erfindung in vorteilhafter Weise eine Vorrichtung zur Erkennung des Oberflächenzustands von Verkehrsstraßen und anderen Erdoberflächenbereichen bereitgestellt wird, die als Abtaststrahlung eine ohnehin vorhandene Nutzsignalstrahlung und/oder eine von Satelliten emittierte Strahlung verwendet. Sie ist dadurch großflächig praktisch weltweit ohne größere Modifikationen in einheitlicher Weise einsetzbar und benötigt nicht unbedingt eigene Abtaststrahlungserzeugungsmittel. Dadurch wird das zusätzliche Einbringen von Strahlung in die Umwelt ebenso vermieden wie der mit zusätzlich bereitzustellenden Strahlungserzeugern einhergehende Aufwand aktiver Systeme.

## Patentansprüche

1. Vorrichtung zur abtaststrahlungsbasierten Erkennung des Oberflächenzustands von Erdoberflächenbereichen, insbesondere von Verkehrsstraßenbereichen, mit
- Empfangsmitteln (7) zum Empfangen wenigstens eines von einem abgetasteten Erdoberflächenbereich (3) reflektierten Zustands informations-Abtaststrählungsanteils (4a, 4b) und
- Auswertemitteln (8, 9, 10) zur Bestimmung des Oberflächenzustands des abgetasteten Erdoberflächenbereiches durch Auswertung der empfangenen, wenigstens den Zustandsinformations-Abtaststrahlungsanteil umfassenden Abtaststrahlung,
**dadurch gekennzeichnet, daß**
- die Abtaststrahlung (4a, 4b, 4c) von Nutzsignalstrahlung eines Fremdsystems gebildet ist.

2. Vorrichtung zur abtaststrahlungsbasierten Erkennung des Oberflächenzustands von Erdoberflächenbereichen, nach Anspruch 1,
**dadurch gekennzeichnet, daß**
- sie einen oder mehrere Satelliten (1) zur Bereitstellung der Abtaststrahlung (4a, 4b, 4c) beinhaltet.

3. Vorrichtung nach Anspruchs 1 oder 2, weiter
**dadurch gekennzeichnet, daß**
die Abtaststrahlung von Nutzsignalstrahlung eines Ortungssystems (GPS) und/oder eines Rundfunk- oder Fernsehübertragungssystems (DBS) gebildet ist.

4. Vorrichtung nach einem der Ansprüche 1 bis 3, weiter
**dadurch gekennzeichnet, daß**
die empfangene und ausgewertete Abtaststrahlung zusätzlich einen nicht vom abgetasteten Erdoberflächenbereich reflektierten Referenz-Abtaststrahlungsanteil (4c) umfaßt.

5. Vorrichtung nach einem der Ansprüche 1 bis 4, weiter
**dadurch gekennzeichnet, daß**
die Auswertemittel (8, 9, 10) die empfangene Abtaststrahlung hinsichtlich Amplitude, Polarisation und/oder Phase auswerten.

6. Vorrichtung nach einem der Ansprüche 1 bis 5, weiter
**dadurch gekennzeichnet, daß**
die Auswertemittel eine Klassifikationsstufe (10) enthalten, die den Oberflächenzustand des abgetasteten Erdoberflächenbereiches gemäß mehreren vorgebbaren Modellzuständen (12a bis 12b) klassifiziert.

## Claims

1. A device for the identification, based on a scanning beam, of the surface condition of areas of the surface of the earth, in particular of areas of roads, having
- receiving means (7) for receiving at least one condition data scanning beam component (4a, 4b) reflected by a scanned area (3) of the surface of the earth and
- evaluating means (8, 9, 10) for determining the surface condition of the scanned area of the surface of the earth by evaluating the received scanning beam which comprises at least the condition data scanning beam component,
**characterised in that**
- the scanning beam (4a, 4b, 4c) takes the form of a useful signal beam of an independent system.

2. A device for the identification, based on a scanning beam, of the surface condition of areas of the surface of the earth in accordance with claim 1,
**characterised in that**
- it contains one or more satellites (1) for the provision of the scanning beam (4a, 4b, 4c).

3. A device in accordance with claim 1 or 2, further
**characterised in that**
the scanning beam takes the form of a useful signal beam from a positioning system (GPS) and/or a radio or television transmission system (DBS).

4. A device in accordance with one of claims 1 to 3, further
**characterised in that**
the scanning beam received and evaluated also comprises a reference scanning beam component (4c) not reflected by the scanned area of the surface of the earth.

5. A device in accordance with one of claims 1 to 4, further
**characterised in that**
the evaluation means (8, 9, 10) evaluate the received scanning beam with regard to amplitude, polarisation and/or phase.

6. A device in accordance with one of claims 1 to 5, further
**characterised in that**
the evaluation means contain a classification stage (10) which classifies the surface condition of the scanned area of the surface of the earth in accordance with several pre-determined model conditions (12a to 12b).

## Revendications

1. Dispositif pour la reconnaisance, basée sur un rayonnement de balayage, de l'état de surface de zones de surface terrestre, en particulier de zones de voie de circulation comprenant
- des moyens de réception (7) pour la réception d'au moins une partie de rayonnement de balayage pour l'information d'état (4a, 4b) réfléchie par une zone de surface terrestre (3) balayée et
- des moyens d'analyse (8, 9, 10) pour la détermination de l'état de surface de la zone de surface terrestre balayée par l'analyse du rayonnement de balayage reçu et comprenant au moins la partie de rayonnement de balayage pour l'information d'état,
**caractérisé en ce que**
- le rayonnement de balayage (4a, 4b, 4c) est formé par le rayonnement de signal utile d'un système extérieur.

2. Dispositif pour la reconnaissance, basée sur le rayonnement de balayage, de l'état de surface de zones de surface terrestre, selon la revendication 1,
**caractérisé en ce que**
- il contient un ou plusieurs satellites (1) pour la mise à disposition du rayonnement de balayage (4a, 4b, 4c) .

3. Dispositif selon la revendication 1 ou 2, également **caractérisé en ce que** le rayonnement de balayage est formé par le rayonnement de signal utile d'un système de localisation (GPS) et/ou d'un système de transmission radio ou télévision (DBS).

4. Dispositif selon l'une quelconque des revendications 1 à 3, également **caractérisé en ce que** le rayonnement de balayage reçu et analysé comprend en supplément une partie de rayonnement de balayage de référence non réfléchie par la zone de surface terrestre balayée.

5. Dispositif selon l'une quelconque des revendications 1 à 4, également **caractérisé en ce que** les moyens d'analyse (8, 9, 10) analysent le rayonnement de balayage reçu en ce qui concerne l'amplitude, la polarisation et/ou la phase.

6. Dispositif selon l'une quelconque des revendications 1 à 5, également **caractérisé en ce que** les moyens d'analyse contiennent un étage de classification (10), qui classifie l'état de surface de la zone de surface terrestre balayée selon plusieurs états de modèle (12a à 12b) prédéfinissables.
